# FASCICULE DE BREVET EUROPEEN

(11) **EP 3 227 112 B1**
(45) Date de publication et mention de la délivrance du brevet: **24.08.2022**
(21) Numéro de dépôt: 15817959.8
(22) Date de dépôt: 01.12.2015
(51) Int. Cl.: B32B 17/10, F41H 5/04

(54) **VITRAGE BLINDE FABRIQUE A PARTIR DE CONSTITUANTS DE VITRAGES FEUILLETES DE GRANDE SERIE**
PANZERVERGLASUNG, DIE AUS BESTANDTEILEN VON MASSENPRODUZIERTEN VERBUNDVERGLASUNGEN HERGESTELLT WIRD
ARMOURED GLAZING MADE FROM COMPONENTS OF MASS-PRODUCED LAMINATED GLAZINGS

(30) Priorité: 04.12.2014 FR 1461900
(43) Date de publication de la demande: 11.10.2017
(73) Titulaire: SAINT-GOBAIN GLASS FRANCE, 92400 Courbevoie (FR)
(72) Inventeur: BOUIGEON, Christian, 45500 Gien (FR); CHAUSSADE, Pierre, 45100 Orléans (FR)
(74) Mandataire: Saint-Gobain Recherche
(86) Numéro de dépôt international: PCT/FR2015/053274
(87) Numéro de publication internationale: WO 2016/087764

(56) Documents cités:
- WO-A1-2014/022663
- DE-U1-202009 009 173
- FR-A1- 2 632 950
- FR-A1- 2 676 049
- US-A1- 2009 311 497
- US-A1- 2012 028 015
- US-A1- 2013 302 581
- US-A1- 2013 312 594

## Description

L'invention a trait à la fabrication de vitrages feuilletés blindés légers, destinés à protéger vis-à-vis de la perforation par des balles type 22 Long Rifle, ou de la pénétration au moyen d'une matraque ou similaire... Avantageusement, ces vitrages de blindage légers peuvent être montés dans la baie de carrosserie d'un véhicule de transport sans rien en modifier, c'est-à-dire peuvent être montés sur une carrosserie de grande série.

A l'heure actuelle, ces vitrages sont fabriqués dans des installations dédiées, en quantités incomparablement plus faibles que ceux de grande série. Les feuilles de verre constituant un tel vitrage sont bombées ensemble, c'est-à-dire notamment par groupes de quatre à huit feuilles de verre, par gravité. On emploie des fours monocellulaires, ou fours batch. Les feuilles de verre sont en poste statique, ce sont les outils qui viennent à eux. Les délais de fabrication sont relativement longs, car l'obtention d'une qualité optique et d'une précision de géométrie requises nécessite des mises au point approfondies. Avant d'obtenir la stabilité requise de propriétés des vitrages, de nombreux articles doivent être mis au rebut.

Le document US 2013 302581 décrit un composite bombé à résistance balistique dont la face destinée à recevoir l'impact comprend au moins une feuille de verre renforcée chimiquement et qui est bombée mécaniquement.

Le document FR 2 632 950 décrit le remplacement d'une vitre d'origine par un vitrage feuilleté bombé, dans lequel une feuille de verre mince trempée chimiquement et plane est notamment bombée à froid lors de son collage aux autres constituants du feuilleté.

Le document US 2012 028015 décrit le bombage simultané de plusieurs feuilles rigides appartenant à un feuilleté et pouvant être constituées de verre ou vitrocéramique notamment.

L'invention a donc été motivée par la préoccupation de réaliser des vitrages blindés légers pour des véhicules de transport tels que véhicules automobiles de grande série, sans modification de leur carrosserie. L'invention vise également des délais de fabrication raccourcis, une amélioration de la qualité optique des vitrages produits et de leur adéquation géométrique au bâti dans lequel ils sont destinés à être installés.

A cette fin, l'invention a pour objet un procédé de fabrication d'un vitrage feuilleté bombé de blindage léger destiné à être monté dans une baie d'un véhicule de transport adaptée au montage en grande série d'un vitrage feuilleté bombé à deux feuilles de verre, caractérisé en ce qu'on emploie au moins trois feuilles de verre constitutives de tels vitrages feuilletés bombés à deux feuilles de verre de grande série, dont les deux d'un seul et même tel vitrage feuilleté bombé à deux feuilles de verre de grande série, qui ont été préalablement mises en forme bombée ensemble par gravité, et en ce qu'aux deux feuilles de verre constituant ledit seul et même vitrage feuilleté bombé de grande série, on assemble du côté de la feuille extérieure de celui-ci, au moins une feuille de verre extérieure destinée à un autre vitrage feuilleté bombé à deux feuilles de verre de grande série, et/ou du côté de sa feuille intérieure, au moins une feuille de verre intérieure destinée à un autre vitrage feuilleté bombé à deux feuilles de verre de grande série, ou bien en ce qu'aux deux feuilles de verre constituant ledit seul et même vitrage feuilleté bombé de grande série, on assemble d'un côté ou de l'autre de celles-ci les deux feuilles de verre ayant été bombées ensemble par gravité, en position adjacente, destinées à au moins un autre vitrage feuilleté bombé à deux feuilles de verre de grande série. Comme il sera vu plus en détails dans la suite, les deux feuilles de verre d'un vitrage feuilleté bombé de grande série diffèrent souvent l'une de l'autre par leur composition (l'une peut-être teintée et l'autre claire), les couches ou motifs sérigraphiés qu'elles portent, leur épaisseur, ainsi appellera-t-on dans la suite, selon l'usage courant, la feuille de verre intérieure celle qui est destinée à être orientée vers l'habitacle du véhicule, et feuille extérieure celle qui est destinée à être orientée vers l'atmosphère extérieure. Les deux feuilles de verre minéral d'un vitrage feuilleté bombé de grande série sont bombées ensemble par gravité pour que la courbure sur toute leur surface soit exactement identique, même si feuille intérieure et feuille extérieure ont une géométrie légèrement différente l'une de l'autre de sorte qu'elles ne sont pas interchangeables.

L'invention permet d'obtenir la protection recherchée vis-à-vis d'un tir 22 Long Rifle ou similaire, vis-à-vis des agressions, pénétrations, ainsi qu'une qualité de géométrie et optique requise du vitrage feuilleté, et améliorées par rapport à celles obtenues dans les productions de petite série actuelles. Le nombre des feuilles de verre mises au rebut est lui aussi bien moindre.

Les vitrages feuilletés bombés de grande série à deux feuilles de verre, tels que pare-brise automobile, ont une géométrie de leur périphérie la plus constante possible, garantissant une parfaite adaptation à la baie de carrosserie dans laquelle ils sont installés, tant en ce qui concerne le contour de leur périphérie que l'angle formé par leur surface de bord. Ainsi obtient-on une excellente précision d'accostage. De plus selon le procédé de l'invention, le vitrage obtenu peut être monté dans la baie de carrosserie, notamment par l'extérieur, et/ou la face intérieure du vitrage étant en appui sur le cadre de baie, de la même manière qu'un pare-brise feuilleté à deux feuilles de verre de grande série.

Cette reproductibilité maximale intrinsèque des grandes séries est également garante d'une qualité optique optimale du vitrage feuilleté, et d'une considérable réduction de coût mettant, dans le cadre de l'invention, un vitrage de blindage léger à la portée du plus grand nombre.

Conformément à des caractéristiques préférées du procédé de l'invention :
- on emploie au moins quatre feuilles de verre constitutives de dits vitrages feuilletés à deux feuilles de verre de grande série ;
- on emploie au plus six feuilles de verre constitutives de dits vitrages feuilletés à deux feuilles de verre de grande série.

Selon l'invention, dans une première variante principale du procédé de l'invention, aux deux feuilles de verre constituant ledit seul et même vitrage feuilleté bombé de grande série, on assemble du côté de la feuille extérieure de celui-ci, au moins une feuille de verre extérieure destinée à un autre vitrage feuilleté bombé à deux feuilles de verre de grande série, et/ou du côté de sa feuille intérieure, au moins une feuille de verre intérieure destinée à un autre vitrage feuilleté bombé à deux feuilles de verre de grande série. L'expression « destinée à » se réfère ici et dans la suite au fait que la feuille de verre a été bombée par gravité avec sa feuille de verre « jumelle » de manière à en épouser au plus près la courbure sur toute sa surface, comme évoqué précédemment.

Un vitrage feuilleté blindé léger selon cette première variante principale sera donc fabriqué en assemblant à la feuille de verre intérieure et la feuille de verre extérieure d'un premier feuilleté bombé de grande série :
- du côté de cette feuille de verre intérieure, la feuille de verre intérieure d'un ou plusieurs autre(s) feuilleté(s) bombé(s) de grande série, et/ou
- du côté de cette feuille de verre extérieure, la feuille de verre extérieure d'un ou plusieurs autre(s) feuilleté(s) bombé(s) de grande série.

Lorsqu'on emploie à la fois au moins une feuille de verre intérieure d'un dit autre feuilleté bombé de grande série et au moins une feuille de verre extérieure d'un dit autre feuilleté bombé de grande série, il n'est pas exclu que ce soient celles destinées à un seul et même autre feuilleté de grande série (et qu'elles aient, en particulier, été mises en forme bombée ensemble).

Selon l'invention, dans une deuxième variante principale du procédé de l'invention, aux deux feuilles de verre constituant ledit seul et même vitrage feuilleté bombé de grande série, on assemble d'un côté ou de l'autre de celles-ci les deux feuilles de verre, en position adjacente, d'au moins un autre vitrage feuilleté bombé à deux feuilles de verre de grande série. Les deux feuilles de verre des au moins deux vitrages feuilletés bombés de grande série sont en position adjacente ; ayant été bombées ensemble deux par deux par gravité, leurs surfaces ont exactement la même courbure. En ce qui concerne la courbure qui peut différer très légèrement d'un feuilleté bombé à deux feuilles de verre de grande série à l'autre, cette différence n'empêche nullement le feuilletage avec tous adhésifs intercalaires classiques du type polyvinylbutyral, éthylène-acétate de vinyle, résine ionomère. Les feuilles de verre peuvent être assemblées dans un état déjà feuilleté par deux feuilles de l'un au moins des feuilletés bombés de grande série, qui est alors éventuellement réchauffé pour être assemblé aux autres feuilles de verre, ou avant feuilletage de tous ces feuilletés bombés à deux feuilles de verre de grande série.

Ces première et deuxième variantes principales du procédé de l'invention peuvent être mises en oeuvre simultanément.

L'invention a également pour objet un vitrage feuilleté de blindage léger fabriqué selon le procédé décrit ci-dessus, et dont les feuilles de verre qui le constituent ont une épaisseur comprise entre 1 et 4 mm, de préférence au moins égale à 1,3 mm et au plus égale à 3,2 mm.

Les feuilles de verre de ce vitrage sont collées les unes aux autres par un adhésif intercalaire. Il peut s'agir de polyvinylbutyral (PVB) en épaisseurs de 0,76 mm ou moitié de cette épaisseur ou associations de multiples de ces épaisseurs selon les requis balistiques et/ou selon les besoins d'un bon laminage, étiré en épaisseur approximative de 0,6 mm, d'éthylène - acétate de vinyle (EVA), de résine telle que résine ionomère, sans que cette liste soit limitative. L'adhésif intercalaire peut procurer une résistance balistique et/ou à la pénétration accrue, ainsi que d'autres fonctionnalités telles qu'isolation acoustique.

Selon une première variante préférée du vitrage de blindage léger de l'invention, sa face opposée à celle où un impact est susceptible de se produire est anti-éclat par le fait qu'elle est constituée d'une feuille de polycarbonate d'épaisseur comprise entre 1,8 et 4, de préférence 2,2 et 3,3 mm, qui est collée à une feuille de verre par une couche de polyuréthane.

Selon une deuxième variante préférée du vitrage de blindage léger de l'invention, sa face destinée à être orientée vers l'intérieur de l'habitacle est anti-éclat par le fait qu'elle est constituée d'une feuille de poly(téréphtalate d'éthylène) munie d'un revêtement anti-rayure du type polysiloxane et/ou fonctionnel (par exemple anti-condensation - anti-buée par fonctionnalisation du polysiloxane par des fonctions hydrophiles) et collée à une feuille de verre par une couche de polyuréthane ou de polyvinylbutyral.

Un autre objet de l'invention consiste en l'application d'un vitrage feuilleté bombé décrit ci-dessus comme pare-brise de véhicule automobile, en particulier comme pare-brise de véhicule léger de police ou camion. Ce vitrage feuilleté bombé présente une résistance aux balles, à la pénétration par batte de base bail ou équivalent, tout en restant léger.

L'invention sera maintenant mieux comprise à la lumière des exemples de réalisation qui suivent.

### Exemple 1

On fabrique un pare-brise de blindage léger à partir de feuilles de verre clair sodocalcique flotté bombées deux à deux en vue de constituer des pare-brise feuilletés à deux feuilles de verre de grande série. Les feuilles de verre intérieures ont une épaisseur de 1,6 mm, les feuilles de verre extérieures une épaisseur de 2,1 mm.

La face intérieure des feuilles de verre intérieures, appelée face 4 dans les feuilletés à deux feuilles de verre, la face 1 étant celle en contact avec l'atmosphère extérieure, porte une sérigraphie recuite dans le four de bombage.

On assemble, de l'intérieur vers l'extérieur du feuilleté, la feuille de verre intérieure et la feuille de verre extérieure destinées à un premier pare-brise à deux feuilles de verre de grande série, la feuille de verre extérieure destinée à un second pare-brise à deux feuilles de verre de grande série puis la feuille de verre extérieure destinée à un troisième pare-brise à deux feuilles de verre de grande série. Les feuilles de verre sont collées deux à deux par une feuille de polyvinylbutyral étiré de 0,6 mm d'épaisseur.

Selon une première variante, on colle sur la face intérieure de ladite feuille de verre intérieure une feuille de polycarbonate (PC) de 2,5 mm par l'intermédiaire d'une couche de polyuréthane de 1,9 mm d'épaisseur.

Selon une deuxième variante, on colle sur la face intérieure de ladite feuille de verre intérieure un complexe constitué d'une feuille de 0,38, respectivement 0,76 mm de PVB plastifié et d'une feuille de 0,18 mm de poly(téréphtalate d'éthylène) (PET) verni par une couche de polysiloxane, commercialisé par la SOCIETE DUPONT DE NEMOURS sous la marque enregistrée Spallshield^{®} SG2 - 157, respectivement - 307.

### Exemple 2

On fabrique un pare-brise de blindage léger à partir de feuilles de verre sodocalcique flotté bombées deux à deux en vue de constituer des pare-brise feuilletés à deux feuilles de verre de grande série. Les feuilles de verre intérieures ont une épaisseur de 1,4 mm, les feuilles de verre extérieures une épaisseur de 1,6 mm.

Les feuilles de verre intérieures sont claires, les feuilles de verre extérieures teintées et leur face intérieure, appelée face 2 dans les feuilletés à deux feuilles de verre, porte une sérigraphie ayant notamment pour fonction de cacher une connexion électrique sous-jacente et/ou l'ablation périphérique ou démargeage de couches minces en face extérieure des feuilles de verre intérieures, par exemple.

On assemble dans cet exemple, cette fois de l'extérieur vers l'intérieur du feuilleté, la feuille de verre extérieure et la feuille de verre intérieure destinées à un premier pare-brise à deux feuilles de verre de grande série, puis successivement la feuille de verre intérieure destinée à un second, un troisième, un quatrième puis un cinquième pare-brise à deux feuilles de verre de grande série.

On utilise le même intercalaire adhésif entre deux feuilles de verre que dans l'exemple précédent, et le même feuilleté partiel anti-éclat constitué de la couche de polyuréthane et de la feuille de polycarbonate est assemblé sur la face intérieure du feuilleté partiel constitué de toutes les feuilles de verre collées les unes aux autres.

On peut utiliser du PVB acoustique pour coller certaines feuilles de verre entre elles, ou toutes, ou encore remplacer une ou plusieurs couche(s) de PVB par une résine à hautes performances mécaniques, notamment une résine ionomère commercialisée par la Société Du Pont de Nemours sous la marque enregistrée Sentry Glas^{®} Plus, en épaisseur de 0,89, 1,52 ou 2,28 mm notamment. La relative finesse des feuilles de verre du vitrage feuilleté bombé de l'invention est particulièrement bien adaptée à l'utilisation de cette résine ionomère, dont le refroidissement est ainsi accéléré par rapport à ce qu'il est avec des feuilles de verre plus épaisses.

On peut utiliser aussi plusieurs couples d'épaisseurs de feuilles extérieures, respectivement intérieures de feuilletés à deux feuilles de verre de grande série, entre autre :
- 2,1, respectivement 2,1 mm ;
- 2,6, respectivement 2,1 mm, notamment.

### Exemple 3

On reproduit l'exemple 1, à la différence près que la partie verrière est exclusivement constituée de deux vitrages feuilletés bombés à deux feuilles de verre de grande série, qui sont réchauffés avant d'être feuilletés ensemble, et que tous les adhésifs intercalaires sont constitués d'une couche de 0,89 mm d'une résine ionomère commercialisée par la Société Du Pont de Nemours sous la marque enregistrée Sentry Glas^{®} Plus.

Les vitrages des exemples 1 à 3 ont une fonctionnalité de protection balistique et vis-à-vis de la pénétration recherchée. Par rapport aux productions de petite série, on obtient des délais de fabrication raccourcis, une amélioration de la qualité optique du vitrage, de la stabilité, la précision de sa géométrie, et donc de son adaptation à la baie de carrosserie dans laquelle il est destiné à être installé.

## Revendications

1. Procédé de fabrication d'un vitrage feuilleté bombé de blindage léger destiné à être monté dans une baie d'un véhicule de transport adaptée au montage en grande série d'un vitrage feuilleté bombé à deux feuilles de verre, **caractérisé en ce qu'**on emploie au moins trois feuilles de verre bombées constitutives de tels vitrages feuilletés bombés à deux feuilles de verre de grande série, dont les deux d'un seul et même tel vitrage feuilleté bombé à deux feuilles de verre de grande série, qui ont été préalablement mises en forme bombée ensemble par gravité, et **en ce qu'**aux deux feuilles de verre constituant ledit seul et même vitrage feuilleté bombé de grande série, on assemble du côté de la feuille extérieure de celui-ci, au moins une feuille de verre extérieure destinée à un autre vitrage feuilleté bombé à deux feuilles de verre de grande série, et/ou du côté de sa feuille intérieure, au moins une feuille de verre intérieure destinée à un autre vitrage feuilleté bombé à deux feuilles de verre de grande série, ou bien **en ce qu'**aux deux feuilles de verre constituant ledit seul et même vitrage feuilleté bombé de grande série, on assemble d'un côté ou de l'autre de celles-ci les deux feuilles de verre ayant été bombées ensemble deux par deux par gravité, en position adjacente, destinées à au moins un autre vitrage feuilleté bombé à deux feuilles de verre de grande série.

2. Procédé selon la revendication 1, **caractérisé en ce qu'**on emploie au moins quatre feuilles de verre constitutives de dits vitrages feuilletés bombés à deux feuilles de verre de grande série.

3. Procédé selon l'une des revendications précédentes, **caractérisé en ce qu'**on emploie au plus six feuilles de verre constitutives de dits vitrages feuilletés bombés à deux feuilles de verre de grande série.

4. Vitrage feuilleté bombé de blindage léger fabriqué selon le procédé de l'une des revendications précédentes, **caractérisé en ce que** les feuilles de verre qui le constituent ont une épaisseur comprise entre 1 et 4 mm, et **en ce que** les feuilles de verre qui le constituent sont collées les unes aux autres par un adhésif intercalaire.

5. Vitrage feuilleté bombé selon la revendication 4, **caractérisé en ce que** les feuilles de verre qui le constituent ont une épaisseur au moins égale à 1,3 mm.

6. Vitrage feuilleté bombé selon l'une des revendications 4 ou 5, **caractérisé en ce que** les feuilles de verre qui le constituent ont une épaisseur au plus égale à 3,2 mm.

7. Vitrage feuilleté bombé selon la revendication 4, **caractérisé en ce qu'**au moins un adhésif intercalaire comprend une résine ionomère.

8. Vitrage feuilleté bombé selon l'une des revendications 4 à 7, **caractérisé en ce que** sa face destinée à être orientée vers l'intérieur de l'habitacle est constituée d'une feuille de polycarbonate d'épaisseur comprise entre 1,8 et 4, de préférence 2,2 et 3,3 mm, qui est collée à une feuille de verre par une couche de polyuréthane.

9. Vitrage feuilleté bombé selon l'une des revendications 4 à 7, **caractérisé en ce que** sa face destinée à être orientée vers l'intérieur de l'habitacle est constituée d'une feuille de poly(téréphtalate d'éthylène) munie d'un revêtement anti-rayure et/ou fonctionnel et collée à une feuille de verre par une couche de polyuréthane ou de polyvinylbutyral.

10. Application d'un vitrage feuilleté bombé selon l'une des revendications 4 à 9 comme pare-brise de véhicule automobile.

11. Application selon la revendication 10 comme pare-brise de véhicule léger de police ou camion.

## Patentansprüche

1. Verfahren zur Herstellung eines gewölbten Verbundglases mit leichter Panzerung, das dazu bestimmt ist, in eine Öffnung eines Transportfahrzeugs eingebaut zu werden, die für den Großserieneinbau eines gewölbten Verbundglases mit zwei Glasscheiben geeignet ist, **dadurch gekennzeichnet, dass** mindestens drei gewölbte Glasscheiben verwendet werden, aus denen dieses gewölbte Verbundglas mit zwei Großserienglasscheiben besteht, von denen die zwei aus ein und demselben gewölbten Verbundglas mit zwei Großserienglasscheiben hergestellt sind, die zuvor zusammen durch Schwerkraft in eine gewölbte Form gebracht wurden, **und dadurch, dass** an den zwei Glasscheiben, aus denen das ein und dasselbe gewölbte Großserienverbundglas besteht, auf der Seite ihrer äußeren Scheibe mindestens eine äußere Glasscheibe angebracht ist, die für ein anderes gewölbtes Verbundglas mit zwei Großserienglasscheiben bestimmt ist, und/oder auf der Seite ihrer inneren Scheibe mindestens eine innere Glasscheibe angebracht ist, die für ein anderes gewölbtes Verbundglas mit zwei Großserienglasscheiben bestimmt ist, **oder dass** an den zwei Glasscheiben, aus denen das ein und dasselbe gewölbte Großserienverbundglas besteht, auf der einen oder der anderen Seite davon die beiden Glasscheiben angebracht sind, die paarweise zusammen durch Schwerkraft in aneinander angrenzender Lage gebogen wurden, die für mindestens ein weiteres gewölbtes Verbundglas aus zwei Großserienglasscheiben bestimmt sind.

2. Verfahren nach Anspruch 1, **dadurch gekennzeichnet, dass** mindestens vier Glasscheiben verwendet werden, aus denen das gewölbten Verbundglas mit zwei Großserienglasscheiben bestehen.

3. Verfahren nach einem der vorstehenden Ansprüche, **dadurch gekennzeichnet, dass** höchstens sechs Glasscheiben verwendet werden, aus denen das gewölbte Verbundglas mit zwei Großserienglasscheiben besteht.

4. Gewölbtes Verbundglas mit leichter Panzerung, das nach dem Verfahren eines der vorstehenden Ansprüche hergestellt ist, **dadurch gekennzeichnet, dass** die Glasscheiben, aus denen es besteht, eine Dicke zwischen 1 und 4 mm aufweisen, **und dass** die Glasscheiben, aus denen es besteht, durch einen Zwischenlagenkleber miteinander verklebt sind

5. Gewölbtes Verbundglas nach Anspruch 4, **dadurch gekennzeichnet, dass** die Glasscheiben, aus denen es besteht, eine Dicke von mindestens 1,3 mm aufweisen.

6. Gewölbtes Verbundglas nach einem der Ansprüche 4 oder 5, **dadurch gekennzeichnet, dass** die Glasscheiben, aus denen es besteht, eine Dicke von höchstens 3,2 mm aufweisen.

7. Gewölbtes Verbundglas nach Anspruch 4, **dadurch gekennzeichnet, dass** mindestens ein Zwischenlagenkleber ein ionomeres Harz umfasst.

8. Gewölbtes Verbundglas nach einem der Ansprüche 4 bis 7, **dadurch gekennzeichnet, dass** seine Vorderseite, die dazu bestimmt ist, zur Innenseite der Fahrgastzelle gerichtet zu sein, aus einer Polycarbonatscheibe mit einer Dicke zwischen 1,8 und 4, vorzugsweise 2,2 und 3,3 mm, besteht, die durch eine Polyurethanschicht mit einer Glasscheibe verklebt ist.

9. Gewölbtes Verbundglas nach einem der Ansprüche 4 bis 7, **dadurch gekennzeichnet, dass** seine Vorderseite, die dazu bestimmt ist, zur Innenseite der Fahrgastzelle gerichtet zu sein, aus einer Poly(ethylenterephthalat)-Scheibe besteht, die mit einer kratzfesten und/oder Funktionsbeschichtung versehen ist und durch eine Polyurethan- oder Polyvinylbutyral-Schicht mit einer Glasscheibe verklebt ist.

10. Anwendung eines gewölbten Verbundglases nach einem der Ansprüche 4 bis 9 als Windschutzscheibe eines Kraftfahrzeugs.

11. Anwendung nach Anspruch 10 als Windschutzscheibe eines leichten Polizeifahrzeugs oder eines Lastkraftwagens.

## Claims

1. A method for manufacturing a light armored curved laminated glazing intended to be fitted in an opening of a transport vehicle suitable for the massproduction fitting of a curved laminated glazing containing two glass sheets, **characterized in that** use is made of at least three constituent curved glass sheets of such mass-produced curved laminated glazing containing two glass sheets, including both sheets from one and the same such mass-produced curved laminated glazing containing two glass sheets, which have been previously bent together by gravity and **in that** joined to the two glass sheets forming said one and the same mass-produced curved laminated glazing, on the side of the outer sheet thereof, is at least one outer glass sheet intended for another mass-produced curved laminated glazing containing two glass sheets, and/or on the side of the inner sheet thereof, is at least one inner glass sheet intended for another mass-produced curved laminated glazing containing two glass sheets, or even **in that** joined to the two glass sheets forming said one and the same mass-produced curved laminated glazing, on one side or the other thereof, are two glass sheets having been bent together in pairs by gravity, in an adjacent position, intended for at least another mass-produced curved laminated glazing containing two glass sheets.

2. The method according to claim 1, **characterized in that** use is made of at least four constituent glass sheets of said mass-produced curved laminated glazing containing two glass sheets.

3. The method according to one of the preceding claims, **characterized in that** use is made of at most six constituent glass sheets of said mass-produced curved laminated glazing containing two glass sheets.

4. A light armored curved laminated glazing manufactured according to the method of one of the preceding claims, **characterized in that** the glass sheets forming it have a thickness comprised between 1 and 4 mm, and **in that** the glass sheets forming it are bonded to one another by an interlayer adhesive.

5. The curved laminated glazing according to claim 4, **characterized in that** the glass sheets forming it have a thickness at least equal to 1.3 mm.

6. The curved laminated glazing according to one of claims 4 or 5, **characterized in that** the glass sheets forming it have a thickness at most equal to 3.2 mm.

7. The curved laminated glazing according to claim 4, **characterized in that** at least one interlayer adhesive comprises an ionomer resin.

8. The curved laminated glazing according to one of claims 4 to 7, **characterized in that** the face thereof intended to be oriented toward the inside of the passenger compartment is constituted of a polycarbonate sheet having a thickness comprised between 1.8 and 4, preferably 2.2 and 3.3 mm, which is bonded to a glass sheet by a polyurethane layer.

9. The curved laminated glazing according to one of claims 4 to 7, **characterized in that** the face thereof intended to be oriented toward the inside of the passenger compartment is constituted of a polyethylene terephthalate sheet provided with a scratch-resistant and/or functional coating and is bonded to a glass sheet by a layer of polyurethane or polyvinyl butyral.

10. An application of a curved laminated glazing according to one of claims 4 to 9 as motor vehicle windshield.

11. The application according to claim 10 as light police vehicle or truck windshield.
